Europäisches Patentamt

European Patent Office

Office européen des brevets

(19)

(11) Veröffentlichungsnummer: **0 111 930**
**B1**

(12) **EUROPÄISCHE PATENTSCHRIFT**

(45) Veröffentlichungstag der Patentschrift:
03.05.89

(51) Int. Cl.⁴: **G 06 K 9/62**

(21) Anmeldenummer: **83112843.4**

(22) Anmeldetag: **20.12.83**

(54) Einrichtung zur gestuften Erkennung von Zeichen, Mustern oder dergleichen.

(30) Priorität: **23.12.82 DE 3247832**

(43) Veröffentlichungstag der Anmeldung:
**27.06.84 Patentblatt 84/26**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
**EP-A- 0 043 571**
**GB-A- 1 300 224**

**IBM TECHNICAL DISCLOSURE BULLETIN, Band 23, Nr. 8, Januar 1981, Seiten 3663-3664, New York, US; A.J. ATRUBIN et al.: "Two-level character recognition" IDEM**
**IBM TECHNICAL DISCLOSURE BULLETIN, Band 22, Nr. 7, Dezember 1979, Seiten 2676-2677, New York, US; R.D. GODDARD et al.: "Weighted template match OCR classification"**
**IBM TECHNICAL DISCLOSURE BULLETIN, Band 22, Nr. 8B, Januar 1980, Seiten 3623-3625, New York, US; R.D. GODDARD: "Data structure and search procedure for acyclic binary digraphs"**

(73) Patentinhaber: **COMPUTER GESELLSCHAFT KONSTANZ MBH, Max-Stromeyer-Strasse 116, D-7750 Konstanz (DE)**

(72) Erfinder: **Bernhardt, Lutz, Dr. rer. nat., Zur Schiffslände 20, D-7750 Konstanz (DE)**

(74) Vertreter: **Mehl, Ernst, Dipl.-Ing. et al, Postfach 22 13 17, D-8000 München 22 (DE)**

**Beschreibung**

Die Erfindung bezieht sich auf eine Einrichtung zur gestuften Erkennung von Zeichen, Mustern oder dergleichen gemäß Oberbegriff des Patentanspruchs 1.

In der modernen Datentechnik gewinnt die maschinelle Zeichenerkennung im Zusammenhang mit der Datenerfassung und Dateneingabe zunehmend an Bedeutung. Im Interesse geringer Substitutions- und Rückweisungsraten werden dabei an die Erkennungssicherheit optischer Leseeinrichtungen hohe Anforderungen gestellt. Für eine sichere Zeichenerkennung ist es deshalb notwendit, daß nicht nur die charakteristischen Merkmale des zu klassifizierenden Zeichens im Hinblick auf die Zugehörigkeit zu einer bestimmten Zeichenklasse bewertet werden, sondern auch seine charakteristischen Unterschiede zu den Repräsentanten aller anderen Zeichenklassen. Bei einem zu erkennenden Zeichensatz von ca. zehn Zeichen, z. B. für die Ziffern 0 bis 9, ist dies, insbesondere bei Anwendung der Norm-Schriften OCR A und OCR B noch relativ einfach. Wird dagegen der von jeweils einem Klassifikator auszuwertende Zeichensatz erhöht, dann werden die Klassifikationsergebnisse in Abhängigkeit von der Gesamtzahl der zu unterscheidenden Zeichen etwa quadratisch schlechter, d. h. eine Klassifizierung von z. B. 30 Zeichenklassen ergibt etwa um den Faktor 9 schlechtere Werte der die Qualität der Erkennung kennzeichnenden Größen als eine Klassifizierung von nur zehn Zeichenklassen. Außerdem ergeben sich bei Anwendung eines nichtlinearen Klassifikatorsystems hinsichtlich des zeitlichen Aufwandes nicht unerhebliche Probleme, weil für die Berechnung der für die Erkennung der einzelnen Zeichen notwendigen Klassifikatorwerte ca. 500 bis 1000 Rechenschritte pro Zeichenklasse erforderlich sind. Da dies zu Lasten der Lesegeschwindigkeit geht, müßte die Rechenarbeit notwendigerweise auf mehrere Rechenwerke verteilt werden, was den Schaltungsaufwand und damit auch die Herstellungskosten für eine derartige Klassifikatoreinrichtung empfindlich erhöhen würde. Aus der DE-OS-3 026 055 ist eine Stufenklassifikator-Einrichtung bekannt, bei der ein Gruppenklassfikator für Z Zeichenklassen vorgesehen ist, der jedes Zeichen einer von n Teilklassifikatoren für jeweils Z/n Zeichenklassen zur endgültigen Klassifizierung zuordnet, wodurch sich der Klassifikatoraufwand im Vergleich zu einem Gesamtklassifikator entsprechend verringert. Ein anderer Lösungsweg zur Reduzierung des Klassifikatoraufwandes ist aus der DE-OS-2 456 210 bekannt. Hierbei wird das Klassifizierungsverfahren mit Hilfe eines Gesamtklassifikators in der Weise durchgeführt, daß bei Vorgabe einer Anzahl N von Klassifikationsmerkmalen, die im Höchstfall erforderlich ist, in der letzten Stufe alle N Merkmale verarbeitet werden und mindestens eine vorangehende Stufe einschaltbar ist, in der nur eine um eine Mehrzahl von Merkmalen verminderte, aus den N Merkmalen ausgewählte Anzahl von Merkmalen verarbeitet wird.

Aus IBM TECHNICAL DISCLOSURE BULLETIN, Band 22; Nr. 7, Dezember 1979, Seiten 2676–2677, New York, US, R. D. GODDARD et al.: «Weighted template match OCR classification» ist eine Einrichtung gemäß dem Oberbegriff des Patentanspruchs 1 bekannt.

Der vorliegenden Erfindung liegt nun die Aufgabe zugrunde, eine Klassifikatoreinrichtung zu schaffen, die bei einer großen Zahl von Zeichenklassen eine hohe Erkennungs- bzw. Lesesicherheit gewährleistet und bei einer Erhöhung der Zeichenklassenanzahl mit relativ geringem Mehraufwand erweitert bzw. entsprechend angepaßt werden kann.

Diese Aufgabe wird bei einer gattungsgemäßen Einrichtung durch die kennzeichnenden Merkmale des Patentanspruchs 1 gelöst. Der Vorteil der erfindungsgemäßen Einrichtung besteht zum einen in der erhöhten Erkennungssicherheit, weil jeder Basisklassifikator nicht den gesamten Zeichenvorrat, sondern nur jeweils zwei Zeichenklassen bzw. Zeichenklassengruppen zu unterscheiden hat und zum anderen in der relativ leichten Erweiterbarkeit des Systems, weil bei jeder neu hinzukommenden Zeichenklasse K die bisher verwendeten Klassifikatoren unverändert bleiben können und lediglich neue Basisklassifikatoren K : X hinzugefügt werden müssen, wobei X stellvertretend für jede bisher eingezogene Zeichenklasse steht.

Ausführungsbeispiele der Erfindung werden im folgenden anhand der Zeichnung näher beschrieben und es zeigen

Fig. 1 den prinzipiellen Aufbau einer Klassifikatoreinrichtung gemäß der Erfindung für beispielsweise fünf Zeichenklassen

Fig. 2 eine Klassifikatoreinrichtung gemäß der Erfindung unter Verwendung von Gruppenklassifikatoren

Fig. 3 eine Weiterbildung der Klassifikatoreinrichtung gemäß Fig. 2.

Fig. 4 eine Klassifikatoreinrichtung nach Fig. 1 mit Ergebniskontrolle.

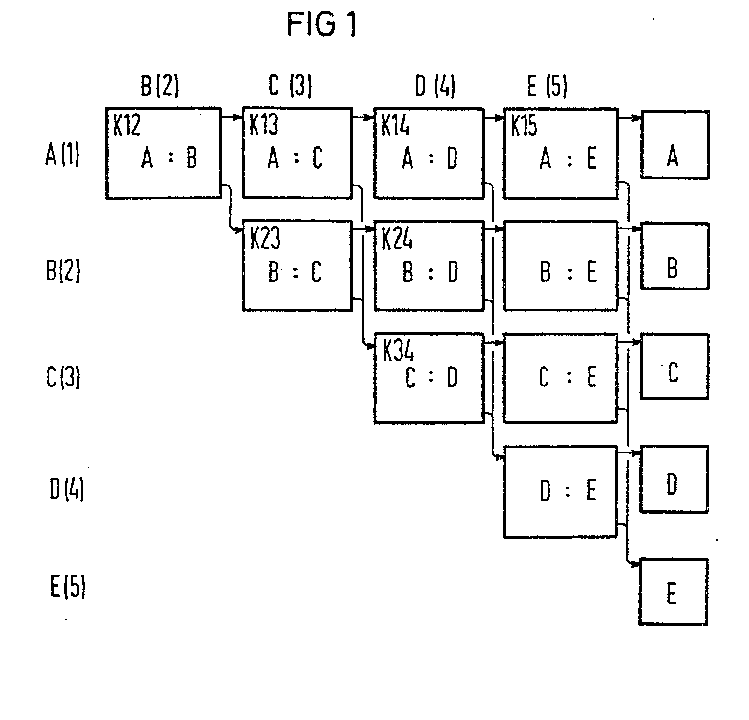

Grundbaustein der in Fig. 1 dargestellten Klassifikator ist ein sogenannter Basisklassifikator, ein linearer Polynomklassifikator, der lediglich zwischen jeweils zwei Zeichenklassen, einer Linksklasse und einer Rechtsklasse, unterscheidet und deshalb relativ einfach realisiert werden kann. Unterscheidungskriterium ist ein sogenannter Koeffizientenvektor ($k_o$, $k_1$ ... $k_1$ ... $k_m$), wobei zu jedem Zeichenmerkmal $m_i$ des sich aus mehreren Merkmalen zusammensetzenden Merkmalvektors ($m_i$ ... $m_m$) eines Zeichens jeweils ein Koeffizient $k_i$ existiert sowie zusätzlich ein Addend $k_o$. Fügt man formal ein Merkmal $m_o = 1$ hinzu, so erhält man den Diskriminierungswert als inneres Produkt beider Vektoren:

$$d = \sum_{i=0}^{m} k_i \cdot m_i$$

Zweckmäßig werden die einzelnen Basisklassifikatoren so normiert, daß sich für die Linksklasse im Idealfall der d-Wert – 1 und für die Rechtsklasse der d-Wert – 1 ergibt. Die Richtungsentscheidung des Basisklassifikators fällt damit über das Vorzeichen des d-Wertes. Durch einen Vorzeichenwechsel aller Koeffizienten ergibt sich demnach aus einem Links/Rechts-Klassifikator ein Rechts/ Links-Klassifikator.

Zur Klassifizierung eines Zeichens benötigt man nun bei einer zu erkennenden Zeichenmenge von insgesamt n Zeichenklassen maximal n (n–1)/ 2 Basisklassifikatoren, da für jedes Zeichenklassenpaar ein entsprechender Basisklassifikator vorgesehen ist. Eine vorteilhafte Klassifikatorstruktur in Form einer Kaskade ist in Fig. 1 für beispielsweise fünf Zeichenklassen A, B, C, D, E anhand eines rechteckigen Matrixschemas dargestellt. Die Reihenfolge der Anordnung der einzelnen Zeichenklassen kann dabei beliebig gewählt werden. Der obere Abzweig aus jedem Basisklassifikator entspricht z. B. der Entscheidung für die Linksklasse, der untere der für die Rechtsklasse. Im einzelnen ist die Kaskade in der Weise aufgebaut, daß dem Basisklassifikator K12 der ersten Kaskadenstufe für die Zeichenklassen A und B zwei Basisklassifikatoren K13, K23 der zweiten Klassifikatorstufe folgen, die die Links- bzw. Rechtsklasse A bzw. B des erste Basisklassifikators K11 mit der dritten Zeichenklasse C verknüpfen. Diesen beiden Basisklassifikatoren K13, K23 der zweiten Kaskadenstufe sind drei Basisklassifikatoren K14, K24, K34 der dritten Kaskadenstufe in der Weise nachgeschaltet, daß die Linksausgänge der beiden Basisklassifikatoren K13, K23 mit den Basisklassifikatoren K14 für die Zeichenklasse A und D bzw. K24 für die Zeichenklassen B und D verbunden sind, während deren Rechtsausgänge gemeinsam mit dem Basisklassifikator K34 für die dritte und vierte Zeichenklasse C und D verbunden sind. Diese Kaskadenschaltung setzt sich in analoger Weise bis zur letzten Matrixspalte fort, in der die jeweilige Resultatsklasse als Ergebnis der in der vorletzten Matrixspalte vorgesehenen Basisklassifikatoren angegeben ist. Bei einer vollständigen Basiskaskade für z. B. n = 29 Zeichenklassen (Buchstabenkanal) ergeben sich mit n (n–1)/2 insgesamt 406 Basisklassifikatoren. Jeder dieser Klassifikatoren entspricht einem Koeffizienten mit m Bytes, wobei m die Anzahl der Merkmale pro Zeichen ist. Die maximale Vektorlänge beträgt z. B. 128 Bytes.

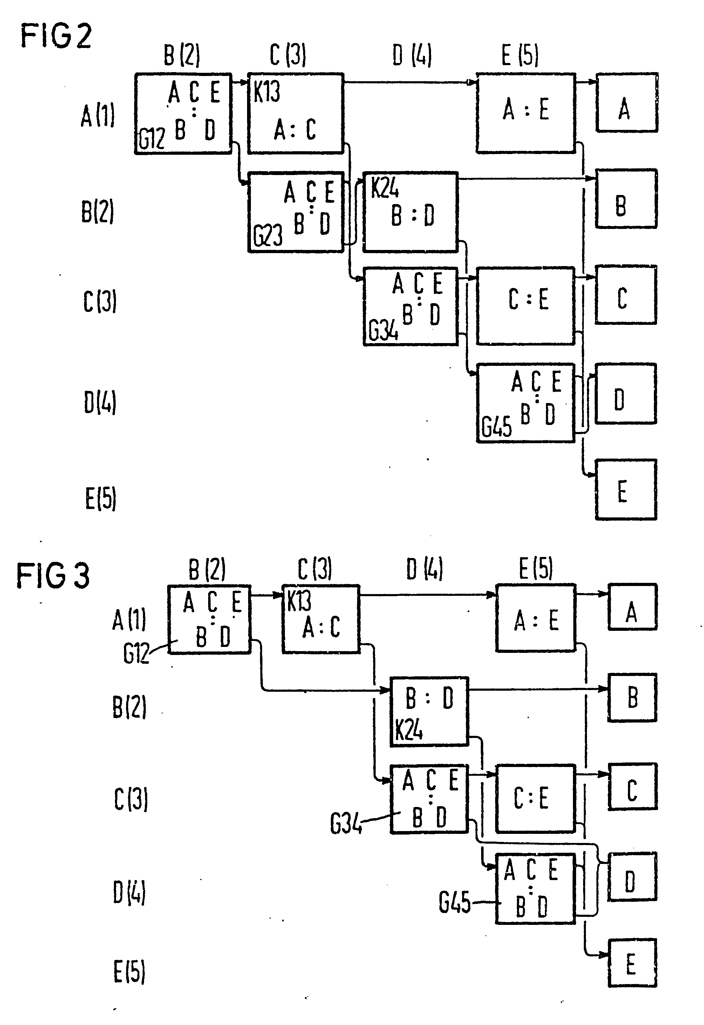

Der damit verbundene hohe Speicherbedarf kann nun gemäß dem in Fig. 2 dargestellten Ausführungsbeispiel durch eine teilweise Verwendung sogenannter Gruppenklassifikatoren verringert werden, die mehrere Basisentscheidungen übernehmen. Es ist jedoch darauf zu achten, daß die Qualität der verwendeten Gruppenklassifikatoren gegenüber den ansonsten erforderlichen Basisklassifikatoren im Hinblick auf die angestrebte hohe Erkennungssicherheit nicht zu sehr abnimmt. Zweckmäßig werden jeder Zeichengruppe des Gruppenklassifikators geometrisch ähnliche Zeichen zugeordnet, so daß beispielsweise bei Großbuchstaben die Zeichen L und I den Zeichen D, O, Ö, U, Ü gegenüberstehen. Ein Gruppenklassifikator, der m gegen n Zeichen diskriminiert, belegt nun nur 128 Bytes Speicherplatz gegenüber m · n · 128 Bytes bei Verwendung von Basisklassifikatoren. Zu dieser statischen Einsparung kommt ein dynamischer Gewinn, da in den Kaskadenzeilen Entscheidungen überflüssig werden, wenn sie von einem Gruppenklassifikator zu treffen sind, der bereits für eine weiter vorne liegende Kaskadenposition zuständig ist.

Fig. 2 zeigt die durch Gruppenklassifikatoren G12, G23, G34, G45 modifizierte Kaskade gemäß Fig. 1, wobei in den Spalten 4 und 5 für die beiden Zeichenklassen D und E jeweils eine Entscheidung eingespart ist.

Außer dem Überspringen redundanter Entscheidungen in einer Zeile können nun noch Wegstücke optimiert werden, bei denen der Rechtszweig aus einem Gruppenklassifikator auf denselben Klassifikator führt. Im Beispiel gemäß Fig. 2 ist dies u. a. der Fall bei dem Zweig, der von der Matrixposition (A, B) auf die Matrixposition (B, C) führt. Wird dieser Zweig durchlaufen, so heißt dies, daß sich der Gruppenklassifikator G12 für die Zeichenklassen B oder D entschieden hat und daß dies in analoger Weise auch der Gruppenklassifikator G23 tun würde. Deshalb kann von der Matrixposition (A, B) aus sofort nach Position (B, D) verzweigt werden. Eine in dieser Weise optimierte Kaskade ist in Fig. 3 dargestellt. Im Gegensatz zur Basiskaskade gemäß Fig. 1 für z. B. fünf Zeichenklassen, wo jedes Zeichen auf jedem möglichen Weg vier Entscheidungen durchläuft, bleiben jetzt für die Zeichenklasse A drei Entscheidungen, für die Zeichenklasse B zwei Entscheidungen, für die Zeichenklasse C vier Entscheidungen, für die Zeichenklasse D drei Entscheidungen und für die Zeichenklasse E – je nach der zufälligen Entscheidung A : C – drei oder vier Entscheidungen.

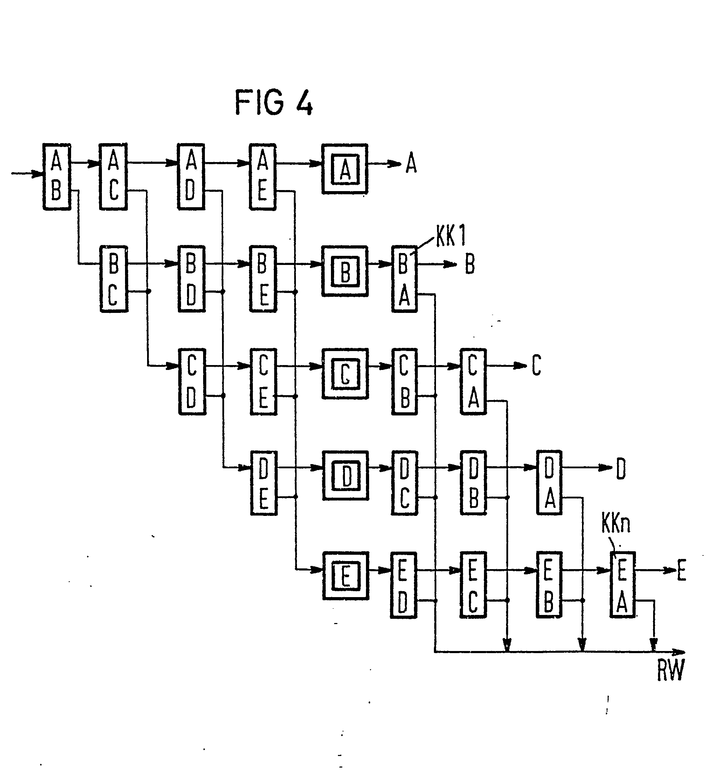

Die Fig. 4 zeigt schließlich ein Ausführungsbeispiel für eine Klassifikatoreinrichtung gemäß Fig. 1, bei der zusätzlich eine Ergebniskontrolle möglich ist. Ohne diese Ergebniskontrolle besteht nämlich rein theoretisch die Gefahr einer Falschaussage, weil sich die Einrichtung in jedem Fall für irgendeine der möglichen Zeichenklassen entscheiden wird bzw. entscheiden muß. Eine derartige Falschaussage ist beispielsweise dann möglich, wenn der Einrichtung ein fontfremdes Zeichen, d. h. ein nicht im Zeichenvorrat enthaltenes Zeichen oder einfach ein dunkler Fleck, z. B. als Folge einer Papierverschmutzung, angeboten wird. Um dies zu verhindern, wird gemäß der in Fig. 4 dargestellten Einrichtung ein sogenannter Kontroll-Lauf durchgeführt. In diesem Kontroll-Lauf wird nachgeprüft, ob sich alle Basisklassifikatoren, die eine Zeichenklasse Z von anderen Zeichenklassen trennen, auch tatsächlich für die Zeichenklasse Z entscheiden. Im Kontroll-Lauf brauchen natürlich nur solche Basis-Klassifikatoren KK1...n aktiviert werden, die am vorangegangenen Entscheidungsprozeß nicht beteiligt waren. Für die Zeichenklasse B bedeutet dies z. B., daß ausgehend vom ersten Basisklassifikator für die Zeichenklassen A und B und nach dessen Entscheidung für die Zeichenklassen B sowie nach Durchlauf der Basisklassifikatoren für BC, BD und BE, letztlich nur noch geprüft werden muß, ob das zu erkennende Zeichen tatsächlich der Zeichenklasse B oder vielleicht doch einer anderen Zeichenklasse, z. B. der Zeichenklasse A, zuzuordnen ist. Letzteres führt dann automatisch zu einer Rückweisung RW des nicht eindeutig klassifizierten Zeichens.

## Patentansprüche

1. Einrichtung zur gestuften Erkennung von Zeichen, Mustern oder dergleichen, aus einem n Zeichen- bzw. Musterklassen umfassenden Zeichenvorrat, unter Verwendung von maximal n (n–1) in Kaskade geschalteten Klassifikatoren, die jeweils mindestens eine oder mehrere Zeichenklassen einer sogenannten Linksklasse von einer oder mehreren Zeichenklassen einer sogenannten Rechtsklasse trennen, derart, daß das jeweils zu erkennende Zeichen dieser Links- bzw. Rechtsklasse zugeordnet bzw. die jeweils andere Klasse ausgeschlossen wird, dadurch gekennzeichnet, daß in der ersten Kaskadenstufe ein Klassifikator (K12) für zwei Zeichenklassen i und i + 1 vorgesehen ist, dessen der Links- bzw. Rechtsklasse zugeordnete Ausgänge mit je einem Klassifikator (K13, K23) der zweiten Kaskadenstufe verbunden sind, von denen der eine zwischen den Zeichenklassen i (Linksklasse) und i + 2 (Rechtsklasse) und der andere zwischen den Zeichenklassen i + 1 (Linksklasse und i + 2 (Rechtsklasse) unterscheidet, daß die der Linksklasse zugeordneten Ausgänge jedes Klassifikators (K13, K23) der zweiten Kaskadenstufe mit je einem Klassifikator (K14, K24) der dritten Kaskadenstufe und die der Rechtsklasse zugeordneten Ausgänge mit einem weiteren gemeinsamen Klassifikator (K34) dieser dritten Kaskadenstufe verbunden sind, deren jeweilige Rechtsklasse einer weiteren Zeichenklasse (i + 3) zugeordnet ist, daß die Klassifikatoren der nächstfolgenden bis zur (n–1)-ten Kaskadenstufe jeweils analog den Klassifikatoren der zweiten Kaskadenstufe gestaltet sind und daß an den der Linksklasse zugeordneten Ausgängen der in der (n–1)-ten Kaskadenstufe vorgesehenen Klassifikatoren und an der der Rechtsklasse zugeordneten und miteinander verbundenen Ausgängen dieser Klassifikatoren jeweils eine der n Zeichenklassen ausgegeben wird.

2. Einrichtung nach Anspruch 1, gekennzeichnet durch die Verwendung von identisch aufgebauten Gruppenklassifikatoren (z. B.: G34) mit n, teils der Linksklasse, teils der Rechtsklasse zugeordneten Zeichenklassen für jeweils diejenigen Klassifikatoren innerhalb der Kaskade, deren eine Zeichenklasse in die Linksklasse des Gruppenklassifikators und deren andere Zeichenklasse in die Rechtsklasse des Gruppenklassifikators fällt.

3. Einrichtung nach Anspruch 2, dadurch gekennzeichnet, daß für Klassifikatoren (z. B.: K13), denen ausgangsseitig zwei Gruppenklassifikatoren folgen, der jeweils der Linksklasse zugeordnete Ausgang unter Umgehung des Gruppenklassifikators direkt auf den im Linksklassenzweig folgenden Klassifikator (z. B.: K15) bzw. Kaskadenausgang schaltbar ist.

4. Einrichtung nach Anspruch 3, dadurch gekennzeichnet, daß bei einer Serienschaltung von zwei Gruppenklassifikatoren (G12, G23) der Ausgang des ersten Gruppenklassifikators (G12) unter Umgehung des zweiten Gruppenklassifikators (G23) direkt an den Eingang des Klassifikators (K24) der nächstfolgenden Kaskadenstufe schaltbar ist, sofern der zweite Gruppenklassifikator (G23) eingangsseitig mit keinem weiteren Klassifikator der vorhergehenden Kaskadenstufe verbunden ist.

5. Einrichtung nach einem der vorhergehenden Ansprüche, dadurch gekennzeichnet, daß an den Ausgängen derjenigen Zeichenklassen (B, C, D, E), die in Klassifikatoren der Kaskade gegenüber wenigstens einer anderen Zeichenklasse (z. B.: A) in der jeweiligen Rechtsklasse auftreten, für jede dieser anderen Zeichenklassen jeweils ein Kontrollklassifikator (z. B.: KK1) nachgeschaltet ist, bei dem die am Ausgang vor dem Kontrollklassifikator auftretende Zeichenklasse (B) der Linksklasse und die jeweils andere Zeichenklasse (A) der Rechtsklasse zugeordnet sind, daß jeweils einer Zeichenklasse (z. B.: E) zugeordnete Kontrollklassifikatoren (..., KKn) über ihre Linksausgänge in Serie geschaltet sind, daß am Linksausgang des jeweils letzten Kontrollklassifikators (z. B.: KKn) die jeweilige Zeichenklasse (z. B.: E) ausgegeben wird und daß die Rechtsausgänge aller Kontrollklassifikatoren mit einem gemeinsamen Rückweisungsausgang (RW) verbunden sind.

## Claims

1. Device for the stepwise recognition of characters, patterns or the like, from a character set comprising n character classes or pattern classes, using a maximum of n (n–1) cascaded classifiers which in each case separate one or more character classes of a so-called left class from one or more character classes of a so-called right class in such a manner that the respective character to be recognized is assigned to this left or right class or is excluded from the respective other class, characterized in that there is provided in the first cascade step a classifier (K12) for two character classes i and i + 1, the outputs of which, assigned to the left or right class, are each connected to a classifier (K13, K23) of the second cascade step, one of which differentiates between the character classes i (left class) and i + 2 (right class) and the other differentiates between the character classes i + 1 (left class) and i + 2 (right class), in that the outputs, assigned to the left class, of each classifier (K13, K23) of the second cascade step are each connected to one classifier (K14, K24) of the third cascade step and the outputs assigned to the right class are connected to a further common classifier (K34) of this third cascade step, the respective right class of which is assigned to a further character class (i + 3), in that the classifiers of the following, up to the (n–1)th cascade step are formed in each case analogously to the classifiers of the second cascade step, and in that one of the n character classes is output in each case at the outputs, assigned to the left class, of the classifiers provided in the (n–1)th cascade step and at the outputs, assigned to the right class and mutually connected, of these classifiers.

2. Device according to Claim 1, characterized by the use of identically structured group classifiers (e. g.: G34) with n character classes, assigned partly to the left class and partly to the right class, for in each case those classifiers within the cascade where one character class falls into the left class of the group classifier and where the other character class falls into the right class of the group classifier.

3. Device according to Claim 2, characterized in that, for classifiers (e. g.: K13) which are followed on the output side by two group classifiers, the output assigned in each case to the left class can, by circumventing the group classifier, be connected directly to the classifier (e. g.: K15) or cascade output following the left class branch.

4. Device according to Claim 3, characterized in that, with a series connection of two group classifiers (G12, G23), the output of the first group classifier (G12) can, by circumventing the second group classifier (G23), be connected directly to the input of the classifier (K24) of the following cascade step, inasmuch as the second group classifier (G23) is connected on the input side to no further classifier of the preceding cascade step.

5. Device according to one of the preceding claims, characterized in that, at the outputs of those character classes (B, C, D, E) which occur in classifiers of the cascade opposite at least one other character class (e. g.: A), in the respective right class, for each of these other character classes a control classifier (e. g.: KK1) is in each case subsequently connected, in which the character class (B) occurring at the output before the control classifier is assigned to the left class and the respective other character class (A) is assigned to the right class, in that in each case control classifiers (..., KKn) assigned to a character class (e. g.: E) are connected in series across their left outputs, in that the respective character class (e. g.: E) is output at the left output of the last control classifier (e. g.: KKn) in each case, and in that the right outputs of all control classifiers are connected to a common reject output (RW).

**Revendications**

1. Dispositif pour la reconnaissance dite en escalier de caractères, formes ou analogues, parmi un stock de caractères comprenant n classes de caractères ou de formes, avec utilisation de tout au plus n (n–1) classificateurs connectés en cascade et séparant chacun au moins une ou plusieurs classes de caractères de ce que l'on appelle une classe gauche d'une ou plusieurs classes de caractères de ce que l'on appelle une classe droite, de manière que le caractère à reconnaître à chaque fois soit coordonné à cette classe gauche ou droite et que l'autre classe soit exclue, caractérisé en ce qu'un classificateur (K12) pour deux classes de caractères i et i + 1 est prévu dans la première marche de la cascade, dont les sorties associées respectivement à la classe gauche et la classe droite sont connectées à des classificateurs (K13, K23) de la deuxième marche de la cascade, dont l'un distingue entre les classes de caractères i (classe gauche) et i + 2 (classe droite) et l'autre entre les classes de caractères i + 1 (classe gauche) et i + 2 (classe droite), que les sorties coordonnées à la classe gauche de chaque classificateur (K13, K23) de la deuxième marche de la cascade sont connectées à des classificateurs (K14, K24) de la troisième marche de la cascade et les sorties coordonnées à la classe droite sont connectées à un classificateur supplémentaire (K34) commun de cette troisième marche de la cascade, dont la classe droite est associée chaque fois à une autre classe de caractères (i + 3), que les classificateurs des marches suivantes, jusqu'à la (n–1)ème marche de la cascade sont constituées chacune de façon analogue aux classificateurs de la deuxième marche et que l'une des n classes de caractères est délivrée chaque fois sur les sorties associées à la classe gauche des classificateurs prévus dans la (n–1)ème marche de la cascade et sur les sorties associées à la classe droite et connectées entre elles de ces classificateurs.

2. Dispositif selon la revendication 1, caractérisé par l'utilisation de classificateurs de groupes (par exemple G34) de constitution identique, avec n classes de caractères, associées en partie à la classe gauche et en partie à la classe droite, pour ceux des classificateurs, à l'intérieur de la cascade, dont une classe de caractères tombe dans la classe gauche du classificateur de groupe et dont l'autre classe de caractères tombe dans la classe droite du classificateur de groupe.

3. Dispositif selon la revendication 2, caractérisé en ce que, pour des classificateurs (par exemple K13) dont la sortie est suivie par deux classificateurs de groupes, la sortie associée à la classe gauche peut être commutée directement, en contournant le classificateur de groupe, sur le classificateur (par exemple K15) suivant dans la branche de la classe gauche ou sur la sortie de la cascade.

4. Dispositif selon la revendication 3, caractérisé en ce que, dans le cas d'un montage en série de deux classificateurs de groupes (G12, G23), la sortie du premier classificateur de groupe (G12) peut être commutée directement, en contournant le second classificateur de groupe (G23), sur l'entrée du classificateur (K24) de la marche suivante de la cascade, dans la mesure où l'entrée du second classificateur de groupe (G23) n'est connectée à aucun autre classificateur de la marche précédente de la cascade.

5. Dispositif selon une des revendications précédentes, caractérisé en ce que les sorties des classes de caractères (B, C, D, E) qui, dans des classificateurs de la cascade, apparaissent dans la classe droite, par opposition à au moins une autre classe de caractères (A par exemple), sont suivies, pour chacune de ces autres classes, par un classificateur de contrôle (KK1 par exemple), avec association de la classe de caractères (B) apparaissant sur la sortie devant le classificateur de contrôle à la classe gauche et avec association de l'autre classe de caractères (A) à la classe droite, que les classificateurs de contrôle (..., KKn) associées a une classe de caractères (E par exemple), sont connectés en série par leurs sorties gauches, que la classe de caractères correspondante (E par exemple) est délivrée sur la sortie gauche du dernier classificateur de contrôle associé (KKn par exemple) et que les sorties droites de tous les classificateurs de contrôle sont reliées à une sortie de rejet (RW) commune.

# FIG 1

|  | B (2) | C (3) | D (4) | E (5) |  |
|---|---|---|---|---|---|
| A (1) | K12<br>A : B | K13<br>A : C | K14<br>A : D | K15<br>A : E | A |
| B (2) |  | K23<br>B : C | K24<br>B : D | B : E | B |
| C (3) |  |  | K34<br>C : D | C : E | C |
| D (4) |  |  |  | D : E | D |
| E (5) |  |  |  |  | E |

EP 0 111 930 B1

FIG 2

FIG 3

# FIG 4